# FASCICULE DE BREVET EUROPEEN

(11) **EP 1 788 736 B1**
(45) Date de publication et mention de la délivrance du brevet: **09.12.2009**
(21) Numéro de dépôt: 06301089.6
(22) Date de dépôt: 26.10.2006
(51) Int. Cl.: H04B 10/26, H04B 10/20

(54) **Dispositif perfectionné de transmission de données pour des équipements de communication d'un réseau optique passif**
Verbesserte Datenübertragungsvorrichtung zur Kommunikationseinrichtungen in einem passiven optischen Netzwerk
Improved data transmission apparatus for communication devices in a passive optical network

(30) Priorité: 17.11.2005 FR 0553489
(43) Date de publication de la demande: 23.05.2007
(73) Titulaire: Alcatel Lucent, 75008 Paris (FR)
(72) Inventeur: Zami, Thierry, 91300 Massy (FR); Chiaroni, Dominique, 92160 Antony (FR)
(74) Mandataire: Chaffraix, Sylvain

(56) Documents cités:
- EP-A- 0 615 358
- WO-A-2004/036794
- FR-A- 2 718 307
- US-A- 4 712 859

## Description

L'invention concerne les réseaux optiques passifs (ou PONs pour « Passive Optical Networks »), et plus particulièrement l'échange de trafics de données entre un équipement de communication dit « tête de réseau » (ou « hub ») et des équipements de communication dits « distants » au sein de tels réseaux PON.

On entend ici par « réseau optique passif » un réseau optique dans lequel aucune régénération de type optique/électrique/optique n'est effectuée entre la tête de réseau (ou hub) et les équipements distants. Il pourra par exemple s'agir d'un réseau optique d'accès à structure en arbre.

Par ailleurs, on entend ici par « tête de réseau » (ou hub) un équipement de communication permettant à d'autres équipements de communication, qui sont connectés à lui, d'accéder à un autre réseau, comme par exemple un réseau en anneau. Il s'agit par exemple d'un équipement de type OLT (« Optical Line Terminal ») dans lequel est centralisée la gestion des droits d'accès du réseau d'accès auquel il est raccordé ainsi qu'éventuellement la gestion de l'allocation de longueur(s) d'onde.

En outre, on entend ici par « équipement distant » un équipement de communication qui ne peut accéder à un autre réseau que par l'intermédiaire d'une tête de réseau. Il s'agit par exemple d'un terminal d'utilisateur, éventuellement de type ONU (« Optical Network Unit »).

L'un des objectifs des opérateurs de réseau de communication est d'offrir des débits toujours plus importants à un nombre d'utilisateurs toujours croissant, sans que cela n'entraîne des coûts trop importants. Pour atteindre cet objectif, on peut par exemple utiliser des réseaux d'accès de type PON, et en particulier ceux qui présentent un rapport performance/coût élevé. C'est notamment le cas des réseaux d'accès appelés RCM-PONs (« Remote Color Managed PONs » - réseaux optiques passifs à gestion de la couleur à distance). Ce type de réseau comporte une structure en arbre reposant sur le raccordement d'équipements distants de type RCM-ONU, indépendants de la longueur d'onde, à une unique tête de réseau de type OLT, dans laquelle est centralisée la gestion de l'allocation des longueurs d'onde.

Dans certains réseaux RCM-PON, la tête de réseau (OLT) transmet par exemple aux équipements distants une alternance d'une première portion d'une porteuse optique, modulée par des données à transmettre selon un débit choisi et durant un premier intervalle temporel, et d'une seconde portion de cette même porteuse optique, sans modulation, et durant un second intervalle temporel. La première portion, dite modulée, est utilisée par le dispositif de réception (ou récepteur) de chaque équipement distant pour récupérer une horloge de la tête de réseau, et plus précisément la fréquence de base qui correspond au débit choisi des données transmises. La seconde portion, dite continue, est utilisée « en ligne » par chaque équipement distant pour transmettre des données à la tête de réseau. Plus précisément, l'équipement distant comprend un dispositif de transmission (ou transmetteur) chargé de moduler la seconde portion de porteuse qu'il reçoit avec les données à transmettre durant des tranches temporelles qui sont concomitantes avec les seconds intervalles temporels.

Lorsqu'un premier intervalle temporel s'achève, le dispositif de réception (ou récepteur) de l'équipement distant n'est plus en mesure de récupérer la fréquence de base, puisque la seconde portion de porteuse qu'il reçoit, pendant le second intervalle temporel qui suit le premier, ne le permet pas. De ce fait, on est obligé d'utiliser, dans les équipements distants, des dispositifs de réception (ou récepteur) fonctionnant en mode rafale (ou « burst »), ce qui est onéreux.

Ce type de réseau RCM-PON est notamment décrit dans les documents suivants :
- D1 : N. J. Frigo, P. P. lannone, P. D. Magill, T. E. Darcie, M. M. Downs, B. N. Desai, U. Koren, T. L. Koch, C. Dragone, H . M. Presby, and G. E. Bodeep, "A Wavelength-Division Multiplexed Passive Optical Network with Cost-Shared Components", pages 1365-1367, IEEE Photonics Technology Letter, Vol. 6, N° 11, November 1994, et
- D2 : Fu-Tai An, Kyeong Soo Kim, David Gutierrez, Scott Yam, , Eric (Shih-Tse) Hu, Kapil Shrikhande, and Leonid G. Kazovsky, "SUCCESS: A Next-Generation Hybrid WDM/TDM Optical Access Network Architecture", pages 2557-2569, Journal of Lightwave Technology, Vol. 22, N° 11, November 2004.

Des variantes de réalisation de réseau RCM-PON ont également été décrites dans les documents suivants :
- D3 : DJ. Shin, D.K. Jung, H.S. Shin, J.W. Kwon, Seongtaek Hwang,Y.J. Oh, and C.S. Shim, "Hybrid WDM/TDM-PON for 128 subscribers using a-selection-free transmitters", PostDeadline paper PDP4, OFC'2004, et
- D4 : N. Deng, N. C. Chan, L. K. Chen & F. Tong, "Data re-modulation on downstream OFSK signal for upstream transmission in WDM passive optical network", Electronics Letters, Vol. 39, N°24, pages 1741-1743, November 2003.

Cependant aucune de ces deux variantes n'est entièrement satisfaisante. La variante décrite dans le document D3 utilise des lasers semiconducteurs à cavité Fabry-Perot à injection d'émission spontanée amplifiée (ou ASE pour « Amplified Spontaneous Emission ») qui ont des portées plus courtes et des débits assez faibles. La variante décrite dans le document D4 met en oeuvre une modulation de phase du trafic descendant (de la tête de station vers les équipements distants) qui nécessite l'utilisation de dispositifs de réception spécifiques dans les équipements distants.

WO 2004/036794 décrit un dispositif optique de modulation sous la forme d'émetteur/récepteur (« transceiver » en anglais) de réflexion, pour transmettre des signaux de données in long d'une fibre optique à une pluralité de sites distants. Le dispositif comprend un démultiplexeur, une pluralité des guides d'ondes comprenant des VOAs (amplificateur optique variable), et un multiplexeur. L'emetteur/récepteur reçoit un signal d'entrée multicanal et le divise en une pluralité de signaux de canal par le démultiplexeur et les fournit aux guides d'ondes. Chaque VOA peut être utilisé pour moduler le signal de canal afin d'appliquer le contenu local concernant le canal individuel. Le multiplexeur combine les signaux de canal modulés par des données afin de produire un signal de sortie multiplexé qui est fourni au réseau d'abonné et incorpore des contenus de diffusion et local. Les signaux reflétés de nouveau à l'émetteur/récepteur sont démultiplexés par les multîplexeurs de sorte que les signaux reflétés de canal soient fournis aux guides d'ondes de canal, et des proportions de ces signaux sont fournies aux détecteurs photoélectriques respectifs par des coupleurs.

L'invention a donc pour but de proposer une solution alternative à celles connues de l'art antérieur.

Elle propose à cet effet un réseau optique passif, comprenant au moins un équipement de communication, dit tête de réseau, couplé à au moins deux équipements de communication, dits distants, par des moyens de transmission et d'aiguillage, la tête de réseau étant chargée de transmettre aux équipements distants une alternance d'une première portion d'une porteuse optique, modulée par des données à transmettre selon un débit choisi et durant un premier intervalle temporel, et d'une seconde portion de cette porteuse optique, modulée par un signal d'horloge (périodique, comme par exemple une sinusoïde) à une fréquence de base (ou rythme) correspondant au débit et durant un second intervalle temporel, et chaque équipement distant étant chargé, d'une part de récupérer la fréquence de base dans les première et seconde portions, et, d'autre part, de transmettre à la tête de réseau, pendant des tranches temporelles choisies synchronisées par la tête de réseau, la partie qui correspond à ces tranches temporelles dans certaines au moins des secondes portions reçues successivement après avoir sur-modulé avec des données à transmettre le signal d'horloge qu'elle contient.

On entend ici par « alternance » la génération d'une première portion pendant un premier intervalle temporel (d'une durée Td choisie) suivie de la génération d'une seconde portion pendant un second intervalle temporel (d'une durée Tu choisie) disjoint du premier mais consécutif à celui-ci, puis de nouveau la génération d'une nouvelle première portion pendant un nouveau premier intervalle temporel suivie de la génération d'une nouvelle seconde portion pendant un nouveau second intervalle temporel, et ainsi de suite. Chaque première ou seconde portion est ainsi générée périodiquement, selon une période égale à Td + Tu.

Le réseau PON selon l'invention peut comporter d'autres caractéristiques qui peuvent être prises séparément ou en combinaison, et notamment :
- chaque équipement distant peut être chargé de sur-moduler le signal d'horloge avec des données à transmettre au moyen d'une technique choisie parmi la technique dite « de non retour à zéro » (ou NRZ pour « Non Return to Zero ») et la technique dite « de retour à zéro » (ou RZ pour « Return to Zéro ») ;
- il peut par exemple être agencé sous la forme d'un réseau à structure en arbre comportant K équipements distants comprenant chacun une entrée/sortie, et une tête de réseau comprenant une entrée/sortie. Dans ce cas ses moyens de transmission et d'aiguillage comprennent par exemple i) une fibre optique principale comportant une première extrémité raccordée à l'entrée/sortie de la tête de réseau et une seconde extrémité, et dédiée à la transmission du trafic descendant et du trafic montant (des équipements distants vers la tête de réseau), ii) un coupleur optique comportant au moins une entrée raccordée à la seconde extrémité de la fibre optique principale et K sorties, et iii) K fibres optiques secondaires de longueurs respectives choisies et comportant chacune une première extrémité raccordée à l'une des K sorties du coupleur optique et une seconde extrémité raccordée à l'entrée/sortie de l'un des K équipements distants ;
- dans une première variante, il peut par exemple être agencé sous la forme d'un réseau à structure en arbre comportant K équipements distants, comprenant chacun une entrée et une sortie, et une tête de réseau comprenant une entrée et une sortie. Dans ce cas ses moyens de transmission et d'aiguillage comprennent i) une fibre optique principale descendante comportant une première extrémité raccordée à la sortie de la tête de réseau et une seconde extrémité, ii) un premier coupleur optique comportant au moins une entrée, raccordée à la seconde extrémité de la fibre optique principale descendante et au moins K sorties, iii) K fibres optiques secondaires descendantes de longueurs respectives choisies et comportant chacune une première extrémité raccordée à l'une des K sorties du premier coupleur optique et une seconde extrémité raccordée à l'entrée de l'un des K équipements distants, iv) une fibre optique principale montante comportant une première extrémité raccordée à l'entrée de la tête de réseau et une seconde extrémité, v) un second coupleur optique comportant au moins K entrées et au moins une sortie raccordée à la seconde extrémité de la fibre optique principale montante, et vi) K fibres optiques secondaires montantes de longueurs respectives choisies et comportant chacune une première extrémité raccordée à l'une des K entrées du second coupleur optique et une seconde extrémité raccordée à la sortie de l'un des K équipements distants ;
- dans une seconde variante, il peut être agencé sous la forme d'un réseau à structure en arbre comportant une tête de réseau, comprenant une entrée raccordée à un premier démultiplexeur optique interne de type 1xN et une sortie alimentée par la sortie d'un premier multiplexeur optique interne de type Nx1, et N groupes de Kn équipements distants, comprenant chacun une entrée et une sortie. Dans ce cas ses moyens de transmission et d'aiguillage comprennent i) une fibre optique principale descendante comportant une première extrémité raccordée à la sortie de la tête de réseau et une seconde extrémité, ii) un second démultiplexeur optique de type 1xN, comportant au moins une entrée, raccordée à la seconde extrémité de la fibre optique principale descendante et au moins N sorties, iii) N premiers coupleurs optiques comportant au moins une entrée, raccordée à l'une des N sorties du second démultiplexeur optique et au moins Kn sorties raccordées chacune à l'entrée de l'un des Kn équipements distants de l'un des N groupes, iv) une fibre optique principale montante comportant une première extrémité raccordée à l'entrée de la tête de réseau et une seconde extrémité, v) un second multiplexeur optique de type Nx1, comportant au moins N entrées et au moins une sortie raccordée à la seconde extrémité de la fibre optique principale montante, et vi) N seconds coupleurs optiques comportant chacun au moins Kn entrées raccordées chacune à la sortie de l'un des Kn équipements distants de l'un des N groupes et au moins une sortie raccordée à l'une des N entrées du second multiplexeur optique.

L'invention propose également un dispositif d'émission/réception, pour un équipement de communication, dit distant, propre à être couplé à un équipement de communication, dit tête de réseau, dans un réseau optique passif.

Ce dispositif d'émission/réception se caractérise par le fait qu'il comprend :
- un coupleur comportant une entrée et des première et seconde sorties et propre à recevoir de la tête de réseau, sur son entrée, des alternances d'une première portion d'une porteuse optique, modulée par des données selon un débit choisi et durant un premier intervalle temporel, et d'une seconde portion de cette porteuse optique, modulée par un signal d'horloge à une fréquence de base correspondant au débit et durant un second intervalle temporel,
- un dispositif de réception couplé à la première sortie du coupleur et chargé de récupérer la fréquence de base dans les première et seconde portions reçues, et
- un dispositif de transmission couplé à la seconde sortie du coupleur et chargé de transmettre à la tête de réseau, pendant des tranches temporelles choisies synchronisées par cette tête de réseau, la partie qui correspond à ces tranches temporelles dans certaines au moins des secondes portions reçues successivement par l'équipement distant, après avoir sur-modulé avec des données à transmettre le signal d'horloge qu'elle contient.

Le dispositif de transmission de ce dispositif d'émission/réception peut être chargé de sur-moduler le signal d'horloge avec des données à transmettre selon une technique choisie parmi la technique de non retour à zéro (NRZ) et la technique de retour à zéro (RZ).

L'invention propose également un équipement de communication de type dit distant, muni d'un dispositif d'émission/réception du type de celui présenté ci-avant.

L'invention est particulièrement bien adaptée, bien que de façon non exclusive, aux réseaux de type RCM-PON.

D'autres caractéristiques et avantages de l'invention apparaîtront à l'examen de la description détaillée ci-après, et des dessins annexés, sur lesquels :
- la figure 1 illustre de façon très schématique un premier exemple de réalisation d'un réseau optique passif (PON) comportant une tête de réseau et des équipements distants selon l'invention,
- la figure 2 illustre de façon très schématique un exemple de réalisation d'un second dispositif de transmission de données équipant un dispositif d'émission/réception selon l'invention,
- la figure 3 illustre de façon très schématique un deuxième exemple de réalisation d'un réseau optique passif (PON) comportant une tête de réseau et des équipements distants selon l'invention, et
- la figure 4 illustre de façon très schématique un troisième exemple de réalisation d'un réseau optique passif (PON) comportant une tête de réseau et des équipements distants selon l'invention.

Les dessins annexés pourront non seulement servir à compléter l'invention, mais aussi contribuer à sa définition, le cas échéant.

L'invention a pour objet de faciliter la synchronisation des dispositifs de réception (ou récepteurs) d'équipements de communication, dits distants, d'un réseau optique passif (PON).

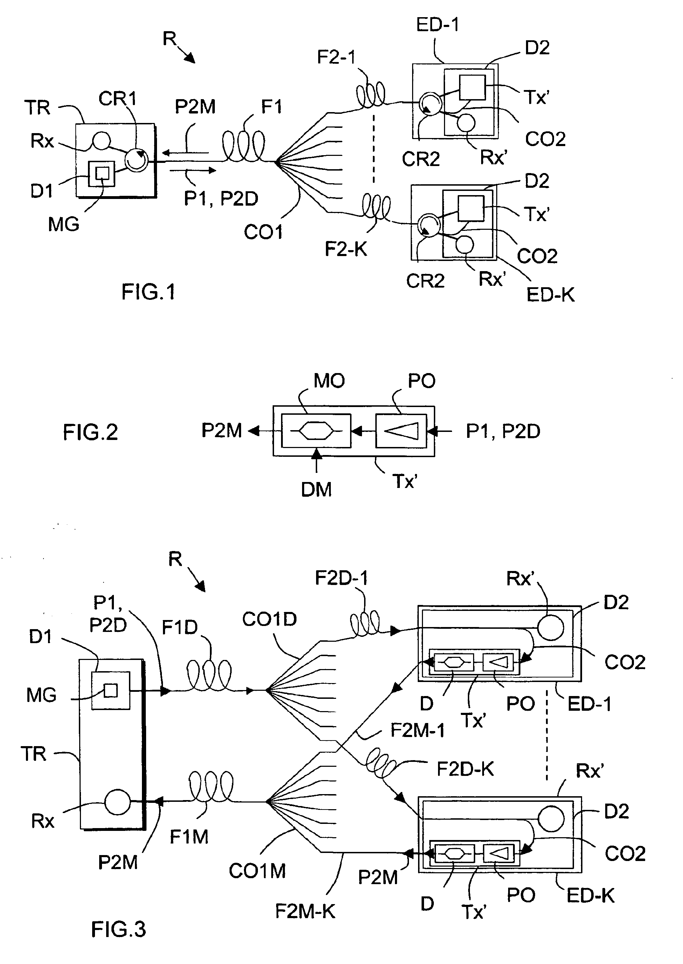

On se réfère tout d'abord aux figures 1 et 2 pour présenter l'invention en référence à un premier exemple de mise en oeuvre, purement illustratif et donc non limitatif.

Comme cela est illustré sur la figure 1, un réseau optique passif (ou PON) R, comprend au moins un équipement de communication TR, que l'on appelle généralement « tête de réseau » (ou hub), et au moins deux équipements de communication ED-k (k = 1 à K et K > 1), dits distants, couplés à la tête de réseau TR par l'intermédiaire de moyens de transmission et d'aiguillage.

On considère dans ce qui suit, à titre d'exemple non limitatif, que le réseau R est de type RCM-PON (Remote Color Managed PONs), la tête de réseau TR est un équipement de type OLT (Optical Line Terminal) et les équipements distants sont de type ONU (Optical Network Unit). Mais, l'invention n'est pas limitée à ces types d'équipements de communication et à ce type particulier de réseau PON.

La tête de réseau TR comporte au moins un premier dispositif (ou module) de transmission de données D1, selon l'invention, que l'on appellera ci-après premier transmetteur, et au moins un premier dispositif (ou module) de réception de données Rx, que l'on appellera ci-après premier récepteur.

Dans l'exemple non limitatif illustré sur la figure 1, la tête de réseau TR comporte une entrée/sortie et non une entrée et une sortie, comme on le verra dans un deuxième exemple de réalisation qui sera décrit plus loin en référence à la figure 3. Cette entrée/sortie est connectée à un circulateur CR1, qui est également connecté à la sortie du premier transmetteur D1 et à l'entrée du premier récepteur Rx.

Le premier transmetteur D1 est chargé de générer à destination des équipements distants ED-k une alternance de première P1 et seconde P2D portions d'une porteuse optique. On entend ici par « alternance » la génération d'une première portion P1 pendant un premier intervalle temporel (d'une durée Td choisie) suivie de la génération d'une seconde portion P2D pendant un second intervalle temporel (d'une durée Tu choisie) disjoint du premier mais consécutif à celui-ci, puis de nouveau la génération d'une nouvelle première portion P1 pendant un nouveau premier intervalle temporel suivie de la génération d'une nouvelle seconde portion P2D pendant un nouveau second intervalle temporel, et ainsi de suite. Chaque première P1 ou seconde P2D portion est ainsi générée périodiquement, selon une période égale à Td + Tu.

Chaque premier intervalle temporel correspond à une phase pendant laquelle la tête de réseau TR transmet des données aux équipements distants ED-k, tandis que chaque second intervalle temporel correspond à une phase pendant laquelle les différents équipements distants ED-k sont autorisés à transmettre des données à la tête de réseau TR, les uns après les autres, avec un éventuel recouvrement temporel, comme on le verra plus loin. Chaque équipement distant ED-k dispose donc d'une fraction (ou « slot » ou encore tranche temporelle) de chaque second intervalle temporel pour transmettre des données à la tête de réseau TR.

Le premier transmetteur D1 comporte un module de génération MG chargé de générer une porteuse, c'est-à-dire une raie laser, et, d'une part, de moduler cette porteuse avec des données à transmettre pendant chaque premier intervalle temporel et selon un débit choisi (par exemple 1 Gbits/s), de manière à constituer une première portion P1, et d'autre part, de moduler la porteuse par un signal d'horloge à une fréquence de base correspondant au débit (1 GHz dans le cas d'un débit de 1Gbit/s) durant chaque second intervalle temporel, de manière à constituer une seconde portion P2D.

Par exemple, le module de génération MG comporte un laser chargé de générer la porteuse et un modulateur chargé de moduler les premières P1 et secondes P2D portions de cette porteuse.

Par exemple, le signal d'horloge est une sinusoïde. Mais, il peut s'agir de tout type de signal périodique dont la fréquence correspond à la fréquence de base de la modulation de la première portion de porteuse P1.

La modulation de la première portion de la porteuse P1 peut se faire au moyen de la technique dite « de retour à zéro » (ou RZ pour « Return to Zero ») ou de la technique dite « de non retour à zéro » (ou NRZ pour « Non Return to Zero »).

Les alternances de première P1 et seconde P2D portions de porteuse, modulées selon l'invention, sont communiquées par le premier transmetteur D1 au circulateur CR1, afin d'être transmises aux équipements distants ED-k via les moyens de transmission et d'aiguillage qui seront décrits plus loin.

Chaque équipement distant ED-k comporte un dispositif d'émission/réception D2 constitué d'un second dispositif (ou module) de transmission de données Tx', que l'on appellera ci-après second transmetteur, d'un second dispositif (ou module) de réception de données Rx', que l'on appellera ci-après second récepteur et d'un coupleur CO2 de type 1x2 (une entrée et des première et seconde sorties).

Dans l'exemple non limitatif illustré sur la figure 1, chaque équipement distant ED-k comporte une entrée/sortie et non une entrée et une sortie, comme on le verra dans un deuxième exemple de réalisation qui sera décrit plus loin en référence à la figure 3. Cette entrée/sortie est connectée à un circulateur CR2, qui est également connecté à la sortie du second transmetteur Tx' et à l'entrée du second récepteur Rx' du dispositif d'émission/réception D2.

Chaque second récepteur Rx' est chargé de réceptionner les premières portions de porteuse P1 afin, d'une part, d'extraire les données qui les modulent, et d'autre part, de déterminer la fréquence de base qui correspond au débit de ces données et qui permet de le caler ainsi que son équipement distant ED-k sur une horloge de la tête de réseau TR. Ce calage est utile, entre autre, à la détermination de l'instant initial où le second transmetteur Tx' d'un équipement distant ED-k est autorisé à transmettre des données à destination de la tête de réseau TR et de l'instant final où ce second transmetteur Tx' n'est plus autorisé à transmettre des données. Ces instants initial et final définissent donc très précisément le calage de la tranche temporelle (ou slot) de transmission d'un équipement distant ED-k donné par rapport à l'horloge de la tête de réseau TR.

Chaque second récepteur Rx' réceptionne également les secondes portions de porteuse P2D afin de continuer à déterminer la fréquence de base définie par le signal d'horloge qui module la porteuse. Ainsi, le second récepteur Rx' dispose sans interruption de la fréquence de base, que l'on soit dans un premier ou un second intervalle temporel, ce qui lui permet de se caler en permanence sur une horloge de la tête de réseau TR.

Cela est particulièrement avantageux car cela permet d'utiliser dans les équipements distants ED-k des seconds récepteurs Rx' conventionnels et non à fonctionnement en rafale dont le coût est notablement plus important et dont les performances en terme de sensibilité de réception sont un peu moins bonnes.

Le second transmetteur Tx' reçoit également une fraction choisie des premières P1 et secondes P2D portions de porteuse grâce au coupleur optique CO2 de type 1x2, couplé à la sortie du circulateur CR2 qui alimente le second récepteur Rx'. Il est synchronisé par rapport à une horloge de la tête de réseau TR grâce à la fréquence de base qui est déterminée en permanence par le second récepteur Rx' de son équipement distant ED-k.

Le second transmetteur Tx' est chargé de sur-moduler avec des données, à transmettre à la tête de réseau TR, le signal d'horloge qui module la porteuse de certaines au moins des secondes portions P2D qu'il reçoit. Toutes les secondes portions de porteuse P2D ne sont pas obligatoirement sur-modulées, étant donné qu'un équipement distant ED-k n'a pas forcément des données à transmettre à la tête de réseau TR dans la tranche temporelle (ou slot) qui lui est attribuée dans chaque second intervalle.

Comme cela est illustré sur la figure 2, le second transmetteur Tx' de chaque dispositif d'émission/réception D2 peut par exemple comporter une porte optique PO et un modulateur optique MO.

La porte optique PO comprend une entrée couplée à l'une des deux sorties du coupleur optique CO2 et une sortie couplée à l'entrée du modulateur optique MO. Cette porte optique PO est chargée de ne laisser passer vers le modulateur optique MO chaque seconde portion de porteuse P2D que pendant les tranches temporelles pendant lesquelles son équipement distant ED-k est autorisé à transmettre du trafic montant vers la tête de réseau TR. Il peut par exemple s'agir d'une porte optique fonctionnant en mode rafale (ou burst), tel qu'un SOA (« Semiconductor Optical Amplifier » - amplificateur optique à semiconducteur), mais cela n'est pas obligatoire. On peut en effet utiliser tout type de porte optique rapide, comme par exemple un commutateur à niobate de lithium.

Le modulateur optique MO reçoit les données DM qui doivent être transmises dans le trafic montant, ainsi que chaque fraction de seconde portion de porteuse P2D, afin de sur-moduler avec ces données DM le signal d'horloge qui la module.

Cette sur-modulation du signal d'horloge peut se faire au moyen de la technique dite « de retour à zéro » (ou RZ pour « Return to Zero »). Mais, il est préférable qu'elle se fasse au moyen de la technique dite « de non retour à zéro » (ou NRZ pour « Non Return to Zero »). En effet, lorsque l'on module un signal d'horloge (périodique) avec la technique NRZ, on obtient automatiquement un signal résultant au format RZ. Cela est avantageux, car cela évite d'avoir à compléter le modulateur optique MO par un autre équipement pour obtenir un tel format de modulation RZ.

Le modulateur optique MO délivre donc sur sa sortie des secondes portions de porteuse montantes P2M. Dans l'exemple illustré sur la figure 1, ces dernières alimentent le circulateur CR2, afin d'être transmises à la tête de réseau TR par leur équipement distant ED-k, via les moyens de transmission et d'aiguillage. C'est le premier récepteur Rx de la tête de réseau TR qui est ensuite chargé d'extraire de chaque seconde portion de porteuse montante P2M qu'il reçoit les données DM qu'elle contient.

On va maintenant décrire trois exemples de moyens de transmission et d'aiguillage permettant de coupler une tête de réseau TR à des équipements distants ED-k.

L'exemple illustré sur la figure 1 correspond à un réseau PON R à structure en arbre, dans laquelle les trafics montants et descendants empruntent les mêmes média (bidirectionnels).

A cet effet, les moyens de transmission et d'aiguillage comportent :
- une fibre optique F1, dite principale, comprenant une première extrémité raccordée à l'entrée/sortie de la tête de réseau TR (et donc à son circulateur CR1) et une seconde extrémité. Cette fibre optique principale F1 assure la transmission bidirectionnelle de tous les trafics montants et descendants,
- un coupleur optique C01 comprenant au moins une entrée/sortie raccordée à la seconde extrémité de la fibre optique principale F1 et K sorties/entrées. Ce coupleur optique C01 est chargé, d'une part, de délivrer sur ses K sorties/entrées K fractions identiques du trafic descendant qu'il reçoit sur son entrée/sortie, et d'autre part, de délivrer sur son entrée/sortie un multiplex temporel constitué des secondes portions de porteuse reçues sur ses K sorties/entrées, et
- K fibres optiques F2-k (F2-1 à F2-K), dites secondaires, de longueurs respectives choisies et comprenant chacune une première extrémité raccordée à l'une des K sorties/entrées du coupleur optique C01 et une seconde extrémité raccordée à l'entrée/sortie de l'un des K équipements distants ED-k (ED-1 à ED-K), et donc à son circulateur CR2. Ces fibres optiques secondaires F2-k assurent la transmission bidirectionnelle des trafics montants et descendants concernant les équipements distants ED-k auxquels elles sont respectivement couplées.

Les longueurs Lk respectives des K fibres optiques F2-k sont par exemple choisies de sorte que chaque seconde portion de porteuse revienne dans la tête de réseau RT avec un retard proportionnel au nombre d'équipements distants ED-k qui l'ont utilisée pour transmettre leurs données DM. Par conséquent, le retard δt entre deux secondes portions de porteuse montantes P2M provenant de deux équipements distants successifs ED-k et ED-k+1 est constant.

Afin de maximiser la répartition des capacités entre les différents équipements distants ED-k, la période globale pendant laquelle les équipements distants ED-k peuvent transmettre leurs données DM peut être égale à la période (Td+Tu) entre deux premiers intervalles temporels successifs pendant lesquels la tête de réseau TR peut transmettre ses données dans des premières portions de porteuse P1. Dans ce cas, le retard δt entre deux secondes portions de porteuse montantes P2M est égal à (Td+Tu)/K. Il peut alors arriver qu'au moins deux slots (tranches temporelles de transmission) d'équipements distants ED-k soient partiellement superposés, ce qui signifie que la tête de réseau TR peut recevoir des données provenant de ces équipements distants ED-k. C'est cette caractéristique qui permet une distribution de la capacité entre les différents équipements distants ED-k.

Bien entendu, d'autres distributions de longueurs Lk peuvent être envisagées.

Par ailleurs, on notera que les durées des slots (ou tranches temporelles de transmission) attribués aux différents équipements distants ED-k peuvent ne pas être égales. Elles peuvent en effet varier en fonction de leurs besoins en terme de bande passante. En outre, une partie d'une seconde portion qui n'est pas utilisée par un équipement distant ED-k pendant un slot donné peut être utilisée par un autre équipement distant, par exemple ED-k-1 ou ED-k+1, en complément de son propre slot, si la tête de réseau l'autorise.

Cela peut permettre de tenir compte des profils de trafic des différents utilisateurs, et par exemple d'adapter les capacités de chaque équipement distant en fonction des heures de la journée.

L'exemple illustré sur la figure 3 correspond à un réseau R, de type PON, qui est également à structure en arbre et dans lequel les trafics montants et descendants empruntent des média (unidirectionnels) différents.

Ce deuxième exemple de réalisation est destiné à pallier un inconvénient que peut présenter un réseau du type de celui présenté ci-avant en référence à la figure 1. En effet, dans ce type de réseau les porteuses montantes P2M et descendantes P1 et P2D présentent la même longueur d'onde et empruntent les mêmes média, ce qui peut entraîner un effet de rétro-diffusion (ou « back-scattering ») susceptible de perturber les transmissions.

Pour pallier cet inconvénient potentiel, les moyens de transmission et d'aiguillage comportent ici :
- une fibre optique F1D, dite principale descendante, comprenant une première extrémité raccordée à la sortie de la tête de réseau TR (et plus précisément à la sortie de son premier transmetteur D1) et une seconde extrémité. Cette fibre optique principale descendante F1D assure la transmission unidirectionnelle du trafic descendant,
- un premier coupleur optique C01 D de type 1xK, comprenant au moins une entrée raccordée à la seconde extrémité de la fibre optique principale descendante F1D et au moins K sorties. Ce coupleur optique CO1D est chargé de délivrer sur ses K sorties K fractions identiques du trafic descendant qu'il reçoit sur son entrée,
- K fibres optiques F2D-k (k = 1 à K - F2D-1 à F2D-K), dites secondaires descendantes, de longueurs respectives choisies (éventuellement différentes) et comportant chacune une première extrémité raccordée à l'une des K sorties du premier coupleur optique C01 D et une seconde extrémité raccordée à l'entrée de l'un des K équipements distants ED-k (ED-1 à ED-K), et donc à son second récepteur Rx' et son second transmetteur Tx' via le coupleur optique CO2. Ces fibres optiques secondaires descendantes F2D-k assurent la transmission unidirectionnelle des trafics descendants destinés aux équipements distants ED-k auxquels elles sont respectivement couplées,
- une fibre optique F1M, dite principale montante, comprenant une première extrémité raccordée à l'entrée de la tête de réseau TR (et plus précisément à son premier récepteur Rx) et une seconde extrémité. Cette fibre optique principale montante F1M assure la transmission unidirectionnelle de tous les trafics montants,
- un second coupleur optique C01 M de type Kx1, comprenant au moins K entrées et au moins une sortie raccordée à la seconde extrémité de la fibre optique principale montante F1M. Ce coupleur optique C01 M est chargé de délivrer sur sa sortie un multiplex temporel constitué des secondes portions de porteuse reçues sur ses K entrées, et
- K fibres optiques F2M-k (k = 1 à K - F2M-1 à F2M-K), dites secondaires montantes, de longueurs respectives choisies (éventuellement différentes) et comprenant chacune une première extrémité raccordée à l'une des K entrées du second coupleur optique C01 M et une seconde extrémité raccordée à la sortie de l'un des K équipements distants ED-k. Ces fibres optiques secondaires montantes F2M-k assurent la transmission unidirectionnelle des trafics montants provenant des équipements distants ED-k auxquels elles sont respectivement couplées.

Les différentes longueurs Lk des fibres optiques secondaires descendantes F2D-k et/ou des fibres optiques secondaires montantes F2M-k sont choisies de la même façon que dans le premier exemple décrit précédemment en référence à la figure 1.

Par ailleurs, dans ce deuxième exemple de réalisation les voies montante et descendante étant séparées, chaque équipement distant ED-k comprend, d'une part, une entrée couplée à la voie descendante et aux second récepteur Rx' et second transmetteur Tx', par l'intermédiaire d'un coupleur optique CO2 de type 1x2, et d'autre part, une sortie couplée à la sortie du second transmetteur Tx'. Hormis cette différence d'agencement, le fonctionnement du second transmetteur Tx' est identique à celui décrit précédemment en référence aux figures 1 et 3.

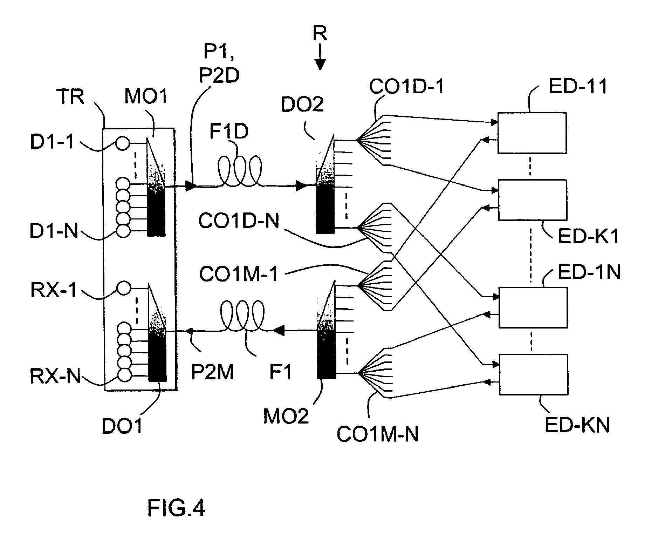

L'exemple illustré sur la figure 4 correspond à un réseau R, de type PON, également à structure en arbre. Ici, les trafics montants et descendants empruntent des média (unidirectionnels) différents, à titre d'exemple illustratif et non limitatif.

Ce troisième exemple de réalisation est destiné à permettre l'utilisation par la tête de réseau TR de plusieurs N longueurs d'onde associées respectivement à N groupes Gn de Kn équipements distants différents, dans le cadre d'un multiplexage de type WDM ( « Wavelength Division Multiplexing » - multiplexage par répartition de longueurs d'onde). Plus précisément, ce troisième exemple permet d'augmenter le nombre de stations distantes connectées à une même tête de réseau lorsque la ressource fibre devient rare, et donc chère (ce peut être par exemple le cas lorsqu'on se base sur une infrastructure de fibre déjà installée).

A cet effet, la tête de réseau TR comporte N premiers transmetteurs D1-n (D1-1 à D1-N), avec n = 1 à N et N >1, du type de celui présenté précédemment, en référence à la figure 1, et N premiers récepteurs Rx-n (Rx-1 à Rx-N). Chaque premier transmetteur D1-n est dédié à une porteuse d'une longueur d'onde donnée. Les sorties des N premiers transmetteurs D1-n sont connectées respectivement aux N entrées d'un premier multiplexeur optique MO1, de type Nx1 et dont la sortie est destinée à délivrer des multiplex de canaux de longueurs d'onde différentes constitués des premières et secondes portions de porteuse générées par les N premiers transmetteurs D1-n. Chaque premier récepteur Rx-n est dédié à une porteuse d'une longueur d'onde donnée. Les entrées des N récepteurs Rx-n sont connectées respectivement aux N sorties d'un premier démultiplexeur optique DO1, de type 1xN et dont l'entrée reçoit des multiplex constitués des secondes portions de porteuse sur-modulées par les seconds transmetteurs Tx' des N groupes Gn de Kn équipements distants.

Les moyens de transmission et d'aiguillage comportent ici :
- une fibre optique F1D, dite principale descendante, comprenant une première extrémité raccordée à la sortie de la tête de réseau TR (et plus précisément à la sortie de son premier multiplexeur optique MO1) et une seconde extrémité. Cette fibre optique principale descendante F1D assure la transmission unidirectionnelle du trafic multiplexé descendant,
- un second démultiplexeur optique DO2 de type 1xN, comprenant au moins une entrée raccordée à la seconde extrémité de la fibre optique principale descendante F1D et au moins N sorties. Ce second démultiplexeur optique DO2 est chargé de délivrer respectivement sur ses N sorties les N premières et secondes portions de porteuses de N longueurs d'onde différentes qu'il reçoit sur son entrée sous forme multiplexée,
- N premiers coupleurs optiques C01 D-n (CO1D-1 à C01 D-N) de type 1xKn, comprenant chacun au moins une entrée raccordée à l'une des N sorties du second démultiplexeur optique DO2 et au moins Kn sorties. Chaque coupleur optique CO1D-n est chargé de délivrer sur ses Kn sorties Kn fractions identiques du trafic descendant qu'il reçoit sur son entrée et qui correspond à une porteuse de longueur d'onde donnée,
- N groupes de Kn fibres optiques, dites secondaires descendantes, de longueurs respectives choisies (éventuellement différentes) et comportant chacune une première extrémité raccordée à l'une des Kn sorties du premier coupleur optique C01 D-n du groupe Gn correspondant et une seconde extrémité raccordée à l'entrée de l'un des Kn équipements distants ED-kn (k = 1 à Kn et n = 1 à N - ED-11 à ED-KN) de l'un des N groupes Gn différents, et donc à son second récepteur Rx' et son second transmetteur Tx' via le coupleur optique CO2. Ces fibres optiques secondaires descendantes assurent la transmission unidirectionnelle des trafics descendants destinés aux équipements distants ED-kn auxquels elles sont respectivement couplées,
- une fibre optique F1M, dite principale montante, comprenant une première extrémité raccordée à l'entrée de la tête de réseau TR (et plus précisément à son premier démultiplexeur DO1) et une seconde extrémité. Cette fibre optique principale montante F1M assure la transmission unidirectionnelle de tous les trafics montants multiplexés,
- un second multiplexeur optique MO2 de type Nx1, comprenant au moins N entrées et au moins une sortie raccordée à la seconde extrémité de la fibre optique principale montante F1M. Ce second multiplexeur optique MO2 est chargé de délivrer sous forme multiplexée sur sa sortie les N multiplex temporels de Kn secondes portions de porteuses sur-modulées de N longueurs d'onde différentes qu'il reçoit sur ses N entrées,
- N seconds coupleurs optiques CO1 M-n (CO1M-1 à CO1M-N) de type Knx1, associés chacun à l'un des N groupes Gn et comprenant chacun au moins Kn entrées et au moins une sortie raccordée à l'une des N entrées du second multiplexeur optique MO2. Chaque coupleur optique CO1M-n, associé à un groupe Gn, est chargé de délivrer sur sa sortie un multiplex temporel constitué des secondes portions de porteuse reçues sur ses Kn entrées en provenance des Kn éléments distants de son groupe Gn, et
- N groupes de Kn fibres optiques, dites secondaires montantes, de longueurs respectives choisies (éventuellement différentes) et comportant chacune une première extrémité raccordée à l'une des Kn entrées du second coupleur optique CO1 M-n du groupe Gn correspondant et une seconde extrémité raccordée à la sortie de l'un des Kn équipements distants ED-kn (k = 1 à Kn et n = 1 à N - ED-11 à ED-KN) du groupe Gn, et donc à son second transmetteur Tx'. Ces fibres optiques secondaires montantes assurent la transmission unidirectionnelle des trafics montants provenant des équipements distants ED-kn auxquels elles sont respectivement couplées.

L'invention ne se limite pas aux modes de réalisation de dispositif d'émission/réception, d'équipement de communication dit distant, et de réseau optique passif décrits ci-avant, seulement à titre d'exemple, mais elle englobe toutes les variantes que pourra envisager l'homme de l'art dans le cadre des revendications ci-après.

## Revendications

1. Réseau optique passif (R) comprenant au moins un équipement de communication (TR), dit tête de réseau, couplé à au moins deux équipements de communication (ED-k), dits distants, par des moyens de transmission et d'aiguillage, tel que ladite tête de réseau (TR) est agencée pour transmettre aux équipements distants (ED-k) une alternance d'une première portion d'une porteuse optique, modulée par des données à transmettre selon un débit choisi et durant un premier intervalle temporel, et d'une seconde portion de ladite porteuse optique, modulée par un signal d'horloge à une fréquence de base correspondant audit débit et durant un second intervalle temporel, et en ce que chaque équipement distant (ED-k) est agencé, d'une part, pour récupérer ladite fréquence de base dans les première et seconde portions reçues, et, d'autre part, pour transmettre à ladite tête de réseau (TR), pendant des tranches temporelles choisies synchronisées par la tête de réseau, la partie qui correspond auxdites tranches temporelles dans certaines au moins des secondes portions reçues successivement après avoir sur-modulé avec des données à transmettre le signal d'horloge qu'elle contient.

2. Réseau selon la revendication 1, **caractérisé en ce que** ledit équipement distant (ED-k) est agencé pour sur-moduler ledit signal d'horloge avec des données à transmettre selon une technique choisie dans un groupe comprenant au moins une technique dite de non retour à zéro et une technique dite de retour à zéro.

3. Réseau selon la revendication 2, **caractérisé en ce que** ledit équipement distant (ED-k) est agencé pour sur-moduler ledit signal d'horloge avec des données à transmettre selon ladite technique dite de non retour à zéro.

4. Réseau selon l'une des revendications 1 à 3, **caractérisé en ce que** ledit signal d'horloge est une sinusoïde.

5. Réseau selon l'une des revendications 1 à 4, **caractérisé en ce qu'**il est agencé sous la forme d'un réseau à structure en arbre comportant K équipements distants (ED-k) et une tête de réseau (TR) comportant chacun au moins une entrée/sortie, et **en ce que** lesdits moyens de transmission et d'aiguillage comprennent i) une fibre optique principale (F1) comportant une première extrémité raccordée à l'entrée/sortie de ladite tête de réseau (TR) et une seconde extrémité, ii) un coupleur optique (CO1) comportant au moins une entrée, raccordée à la seconde extrémité de la fibre optique principale (F1) et au moins K sorties, et iii) K fibres optiques secondaires (F2-k) de longueurs respectives choisies et comportant chacune une première extrémité raccordée à l'une des K sorties dudit coupleur optique (CO1) et une seconde extrémité raccordée à l'entrée/sortie de l'un des K équipements distants (EDk).

6. Réseau selon l'une des revendications 1 à 4, **caractérisé en ce qu'**il est agencé sous la forme d'un réseau à structure en arbre comportant K équipements distants (ED-k) et une tête de réseau (TR) comprenant chacun une entrée et une sortie, et **en ce que** lesdits moyens de transmission et d'aiguillage comprennent i) une fibre optique principale descendante (F1D) comportant une première extrémité raccordée à la sortie de la tête de réseau (TR) et une seconde extrémité, ii) un premier coupleur optique (CO1D) comportant au moins une entrée raccordée à la seconde extrémité de la fibre optique principale descendante (F1D) et au moins K sorties, iii) K fibres optiques secondaires descendantes (F2D-k) de longueurs respectives choisies et comportant chacune une première extrémité raccordée à l'une des K sorties dudit premier coupleur optique (CO1D) et une seconde extrémité raccordée à l'entrée de l'un des K équipements distants (ED-k), iv) une fibre optique principale montante (F1M) comportant une première extrémité raccordée à l'entrée de la tête de réseau (TR) et une seconde extrémité, v) un second coupleur optique (CO1M) comportant au moins K entrées et au moins une sortie raccordée à la seconde extrémité de la fibre optique principale montante (F1M), et vi) K fibres optiques secondaires montantes (F2M-k) de longueurs respectives choisies et comportant chacune une première extrémité raccordée à l'une des K entrées dudit second coupleur optique (CO1M) et une seconde extrémité raccordée à la sortie de l'un des K équipements distants (ED-k).

7. Réseau selon l'une des revendications 1 à 4, **caractérisé en ce qu'**il est agencé sous la forme d'un réseau à structure en arbre comportant une tête de réseau (TR), comprenant une entrée raccordée à un premier démultiplexeur optique interne (DO1) de type 1xN et une sortie alimentée par la sortie d'un premier multiplexeur optique interne (MO1) de type Nx1, et N groupes (Gn) de Kn équipements distants (ED-kn), comprenant chacun une entrée et une sortie, et **en ce que** lesdits moyens de transmission et d'aiguillage comprennent i) une fibre optique principale descendante (F1D) comportant une première extrémité raccordée à la sortie de la tête de réseau (TR) et une seconde extrémité, ii) un second démultiplexeur optique (DO2) de type 1xN, comportant au moins une entrée, raccordée à la seconde extrémité de la fibre optique principale descendante (F1D) et au moins N sorties, iii) N premiers coupleurs optiques (CO1-n) comportant au moins une entrée, raccordée à l'une des N sorties dudit second démultiplexeur optique (DO2) et au moins Kn sorties raccordées chacune à l'entrée de l'un des Kn équipements distants (ED-kn) de l'un des N groupes (Gn), iv) une fibre optique principale montante (F1M) comportant une première extrémité raccordée à l'entrée de la tête de réseau (TR) et une seconde extrémité, v) un second multiplexeur optique (M02) de type Nx1, comportant au moins N entrées et au moins une sortie raccordée à la seconde extrémité de la fibre optique principale montante (F1M), et vi) N seconds coupleurs optiques (CO2-n) comportant au moins Kn entrées raccordées chacune à la sortie de l'un des Kn équipements distants (ED-kn) de l'un des N groupes (Gn) et au moins une sortie raccordée à l'une des N entrées dudit second multiplexeur optique (M02).

8. Dispositif d'émission/réception (D2), pour un équipement de communication (ED-k), dit distant, propre à être couplé à un équipement de communication (TR), dit tête de réseau, ledit équipement distant (ED-k) et ladite tête de réseau (TR) faisant partie d'un réseau optique passif (R), le dispositif d'émission/reception comprenant i) un coupleur (CO2) comportant une entrée et des première et seconde sorties et propre à recevoir de ladite tête de réseau (TR), sur son entrée, des alternances d'une première portion d'une porteuse optique, modulée par des données selon un débit choisi et durant un premier intervalle temporel, et d'une seconde portion de ladite porteuse optique, modulée par un signal d'horloge à une fréquence de base correspondant audit débit et durant un second intervalle temporel, ii) un dispositif de réception (Rx') couplé à la première sortie dudit coupleur (CO2) et agencé pour récupérer ladite fréquence de base dans les première et seconde portions reçues, et iii) un dispositif de transmission (Tx') couplé à la seconde sortie dudit coupleur (CO2) et agencé pour transmettre à ladite tête de réseau (TR), pendant des tranches temporelles choisies synchronisées par cette tête de réseau, la partie qui correspond auxdites tranches temporelles dans certaines au moins des secondes portions reçues successivement par ledit équipement distant (ED-k), après avoir sur-modulé avec des données à transmettre le signal d'horloge qu'elle contient.

9. Dispositif selon la revendication 8, **caractérisé en ce que** ledit dispositif de transmission (Tx') est agencé pour sur-moduler ledit signal d'horloge avec des données à transmettre selon une technique choisie dans un groupe comprenant au moins une technique dite de non retour à zéro et une technique dite de retour à zéro.

10. Dispositif selon la revendication 9, **caractérisé en ce que** ledit dispositif de transmission (Tx') est agencé pour sur-moduler ledit signal d'horloge avec des données à transmettre selon ladite technique dite de non retour à zéro.

11. Equipement de communication distant (ED), pour un réseau optique passif, **caractérisé en ce qu'**il comprend un dispositif d'émission/réception (D2) selon l'une des revendications 8 à 10.

## Claims

1. A passive optical network (R), comprising at least one communication equipment, called the headend (TR), coupled to at least two communication equipment (ED-k) called remote, by transmission and routing means, such that said headend (TR) is adapted for transmitting to the remote equipment (ED-k) an alternation between a first portion of an optical carrier, modulated by data to be transmitted in a chosen bitrate and over a first interval of time, and a second portion of said optical carrier, modulated by a clock signal whose base frequency corresponds to said bitrate and over a second interval of time, and in that each remote equipment (ED-k) is adapted both for retrieving said base frequency in the first and second portions received, and for transmitting to said headend (TR), during chosen time slots synchronized by the headend, the portion which corresponds to said time slots in at least some of the second portions successively received after having overmodulated the clock signal that it contains with data to be transmitted.

2. A network according to claim 1, **characterized in that** said remote equipment is adapted for over-modulating said clock signal with data to be transmitted in accordance with a technique chosen from a group comprising at least a so-called non-return-to-zero technique and a so-called return-to-zero technique.

3. A network according to claim 2, **characterized in that** said remote equipment (ED-k) is adapted for over-modulating said clock signal with data to be transmitted according to said non-return-to-zero technique.

4. A network according to one of claims 1 to 3, **characterized in that** said clock signal is a sine wave.

5. A network according to one of claims 1 to 4, **characterized in that** it is arranged in the form of a tree-shaped structure comprising K remote equipment (EDk) and one headend (TR) each comprising at least one input/output, and **in that** said transmission and routing means comprise i) a main optical fiber (F1) comprising a first end connected to the input/output of said headend (TR) and a second end, ii) an optical coupler (CO1) comprising at least one input, connected to the second end of the main optical fiber (F1) and at least K outputs, and iii) K secondary optical fibers (F2-k) with chosen respective lengths, each comprising a first end connected to one of the K outputs of said optical coupler (CO1) and a second end connected to the input/output of one of the K remote equipment (ED-k).

6. A network according to one of claims 1 to 4, **characterized in that** it is arranged in the form of a tree-shaped structure comprising K remote equipment (EDk) and one headend each comprising one input and one output, and **in that** said transmission and routing means comprise i) a main downstream optical fiber (F1D) comprising a first end connected to the output of the headend (TR) and a second end, ii) a first optical coupler (CO1D) comprising at least one input connected to the second end of the main downstream optical fiber (F1D) and at least K outputs, iii) K secondary downstream optical fibers (F2D-k) with chosen respective lengths, each comprising a first end connected to one of the K outputs of said first optical coupler (CO1D) and a second end connected to the input of one of K remote equipment (EDk), iv) a main upstream optical fiber (F1M) comprising a first end connected to the input of the headend (TR) and a second end, v) a second optical coupler (CO1M) comprising at least K inputs and at least one output connected to the second end of the main upstream optical fibers (F1M), and vi) K secondary upstream optical fibers (F2M-k) with chosen respective lengths, each comprising a first end connected to one of the K inputs of said second optical coupler (CO1M) and a second end connected to the output of one of K remote equipment (ED-k),

7. A network according to one of claims 1 to 4, **characterized in that** it is arranged in the form of a network with a tree-shaped structure comprising a headend, comprising an input connected to a first internal 1xN optical demultiplexer (DO1) and an output supplied by the output of a first internal Nx1 optical multiplexer (MO1), and N groups (Gn) of Kn remote equipment (ED-kn), each one comprising an input and output, and **in that** said transmission and routing means comprise i) a main downstream optical fiber (F1D) comprising a first end connected to the output of the headend (TR) and a second end, ii) a second Nx1 optical demultiplexer (DO2) comprising at least one input, connected to the second end of the main downstream optical fiber (F1D) and at least N outputs, iii) N first optical couplers (CO1-n) comprising at least one input, connected to one of the N outputs of said second optical demultiplexer (DO2) and at least Kn outputs each connected to the input of one of the Kn remote equipment (ED-kn) of one of the N groups (Gn), iv) a main upstream optical fiber (F1M) comprising a first end connected to the input of the headend (TR) and a second end, v) a second Nx1 optical multiplexer (M02) comprising at least N inputs and at least one output connected to the second end of the main upstream optical fiber (F1M), and vi) N second optical couplers (CO2-n) comprising at least Kn inputs each connected to the output of one of Kn remote equipment (ED-kn) of one of N groups (Gn) and at least one output connected to one of the N inputs of said second optical multiplexer (M02).

8. A transmitter/receiver apparatus (A2) for a communication equipment (EDk) called remote, capable of being connected to a communication equipment (TR) called a headend, said remote equipment (ED-k) and said headend (TR) forming part of a passive optical network (N), the transmitter/receiver apparatus comprising i) a coupler (CO2) comprising an input and first and second outputs, and capable of receiving from said headend (TR), at an input, alternations between a first portion of an optical carrier, modulated by data in a chosen bitrate and over a first interval of time, and a second portion of said optical carrier, modulated by a clock signal at a base frequency corresponding to said bitrate and over a second interval of time, ii) a reception apparatus (Rx') coupled to the first output of said coupler (CO2) and adapted for retrieving said base frequency from the first and second portions received, and iii) a transmission apparatus (Tx') coupled to the second output of said coupler (CO2) and adapted for transmitting to said headend (TR), during chosen time slots synchronized by that headend, the portion which corresponds to said time slots in at least some of the second portions successively received by said remote equipment (ED-k) after having over-modulated the clock signal that it contains with data to be transmitted.

9. An apparatus according to claim 8, **characterized in that** said transmission apparatus (Tx') is adapted for over-modulating said clock signal with data to be transmitted in accordance with a technique chosen from a group comprising at least a so-called non-return-to-zero technique and a so-called return-to-zero technique.

10. An apparatus according to claim 9, **characterized in that** said transmission apparatus (Tx') is adapted for over-modulating said clock signal using data to be transmitted according to said non-return-to-zero technique.

11. A remote communication equipment (ED) for a passive optical network, **characterized in that** it comprises a transmitter/receiver apparatus (A2) according to one of claims 8 to 10.

## Patentansprüche

1. Passives optisches Netzwerk (R) mit mindestens einem Kommunikationsgerät (TR), der sogenannten Netzkopfstation, welches über die Übertragungs- und Wegleitungsmittel an mindestens zwei sogenannte entfernte Kommunikationsgeräte (ED-k) gekoppelt ist, so dass die Netzkopfstation (TR) dazu ausgelegt ist, eine Alternanz eines von gemäß einem gewählten Durchsatz und während eines ersten Zeitintervalls zu übertragenen Daten modulierten ersten Abschnitts einer optischen Trägerfrequenz und eines von einem Taktsignal bei einer Grundfrequenz, welche dem besagten Durchsatz entspricht, während eines zweiten Zeitintervalls modulierten zweiten Abschnitts der besagten optischen Trägerfrequenz an die entfernten Geräte (ED-k) zu übertragen, **dadurch gekennzeichnet, dass** ein jedes der entfernten Geräte (ED-k) dazu ausgelegt ist, einerseits die besagte Grundfrequenz in dem empfangenen ersten und dem empfangenen zweiten Abschnitt zurückzugewinnen, und andererseits während von der Netzkopfstation ausgewählten und synchronisierten Zeitschlitzen den Teil, welcher den besagten Zeitschlitzen in zumindest bestimmten der nacheinander empfangenen zweiten Abschnitte entspricht, an die besagte Netzkopfstation (TR) zu übertragen, nachdem das darin enthaltene Taktsignal mit zu übertragenden Daten übermoduliert wurde.

2. Netzwerk nach Anspruch 1, **dadurch gekennzeichnet, dass** das besagte entfernte Gerät (ED-k) dazu ausgelegt ist, das besagte Taktsignal mit zu übertragenden Daten gemäß einer Technik, welche in einer Gruppe, die mindestens eine sogenannte Ohne-Rückkehr-zu-Null-Technik und eine sogenannte Rückkehr-zu-Null-Technik umfasst, gewählt wird, zu übermodulieren.

3. Netzwerk nach Anspruch 2, **dadurch gekennzeichnet, dass** das besagte entfernte Gerät (ED-k) dazu ausgelegt ist, das besagte Taktsignal mit zu übertragenen Daten gemäß der besagten sogenannten Ohne-Rückkehr-zu-Null-Technik zu übermodulieren.

4. Netzwerk nach einem der Ansprüche 1 bis 3, **dadurch gekennzeichnet, dass** das besagte Taktsignal eine Sinuskurve ist.

5. Netzwerk nach einem der Ansprüche 1 bis 4, **dadurch gekennzeichnet, dass** es in der Form eines Netzwerks mit Baumstruktur mit K entfernten Geräten (ED-k) und einer Netzkopfstation (TR), welche jeweils mit mindestens einem Eingang/Ausgang ausgestattet sind, angeordnet ist, und **dadurch**, dass die besagten Übertragungs- und Wegleitungsmittel umfassen: i) Eine optische Hauptfaser (F1) mit einem ersten Ende, welches an den Eingang/Ausgang der besagten Netzkopfstation (TR) angeschlossen ist, und einem zweiten Ende, ii) einen optischen Koppler (CO1) mit mindestens einem Eingang, welcher an das zweite Ende der optischen Hauptfaser (F1) angeschlossen ist, und mindestens K Ausgängen, und iii) K optische Nebenfasern (F2-k), deren jeweilige Längen ausgewählt sind, mit jeweils einem ersten Ende, welches an einen der K Ausgänge des besagten optischen Kopplers (CO1) angeschlossen ist, und einem zweiten Ende, welches an den Eingang/Ausgang eines der K entfernten Geräte (ED-k) angeschlossen ist.

6. Netzwerk nach einem der Ansprüche 1 bis 4, **dadurch gekennzeichnet, dass** es in der Form eines Netzwerks mit Baumstruktur mit K entfernten Geräten (ED-k) und einer Netzkopfstation (TR), welche jeweils mit einem Eingang und einem Ausgang ausgestattet sind, angeordnet ist, und **dadurch**, dass die besagten Übertragungs- und Wegleitungsmittel umfassen: i) Eine optische Downlink-Hauptfaser (F1D) mit einem ersten Ende, welches an den Ausgang der besagten Netzkopfstation (TR) angeschlossen ist, und einem zweiten Ende, ii) einen ersten optischen Koppler (CO1D) mit mindestens einem Eingang, welcher an das zweite Ende der optischen Downlink-Hauptfaser (F1D) angeschlossen ist, und mindestens K Ausgängen, iii) K optische Downlink-Nebenfasern (F2D-k), deren jeweilige Längen ausgewählt sind, mit jeweils einem ersten Ende, welches an einen der K Ausgänge des besagten ersten optischen Kopplers (C01 D) angeschlossen ist, und einem zweiten Ende, welches an den Eingang eines der K entfernten Geräte (ED-k) angeschlossen ist, iv) eine optische Uplink-Hauptfaser (F1M) mit einem ersten Ende, welches an den Eingang der Netzkopfstation (TR) angeschlossen ist, und einem zweiten Ende, v) einen zweiten optischen Koppler (CO1M) mit mindestens K Eingängen und mindesten einem Ausgang, welcher an das zweite Ende der optischen Uplink-Hauptfaser (F1 M) angeschlossen ist, und vi) K optische Uplink-Nebenfasern (F2M-k), deren jeweilige Längen ausgewählt sind, mit jeweils einem ersten Ende, welches an einen der K Eingänge des besagten zweite optischen Kopplers (CO1M) angeschlossen ist, und einem zweiten Ende, welches an den Ausgang eines der K entfernten Geräte (ED-k) angeschlossen ist.

7. Netzwerk nach einem der Ansprüche 1 bis 4, **dadurch gekennzeichnet, dass** es in der Form eines Netzwerks mit Baumstruktur mit einer Netzkopfstation (TR), welche mit einem an einen ersten internen optischen Demultiplexer (DO1) vom Typ 1xN angeschlossenen Eingang und einem von dem Ausgang eines ersten internen optischen Multiplexers (MO1) vom Typ Nx1 versorgten Ausgang ausgestattet ist, und N Gruppen (Gn) von Kn entfernten Geräten (ED-kn) mit jeweils einem Eingang und einem Ausgang angeordnet ist, und **dadurch**, dass die besagten Übertragungs- und Wegleitungsmittel umfassen: i) Eine optische Downlink-Hauptfaser (F1D) mit einem ersten Ende, welches an den Ausgang der Netzkopfstation (TR) angeschlossen ist, und einem zweiten Ende, ii) einen zweiten optischen Demultiplexer (DO2) vom Typ 1xN mit mindestens einem Eingang, welcher an das zweite Ende der optischen Downlink-Hauptfaser (F1D) angeschlossen ist, und mit mindestens N Ausgängen, iii) N erste optische Koppler (CO1-n) mit mindestens einem an einen der N Ausgänge des besagten zweiten optischen Demultiplexers (DO2) angeschlossenen Eingang und mindestens Kn jeweils an den Eingang eines der Kn entfernten Geräts (ED-kn) einer der N Gruppen (Gn) angeschlossenen Ausgängen, iv) eine optische Uplink-Hauptfaser (F1 M) mit einem ersten Ende, welches an den Eingang der Netzkopfstation (TR) angeschlossen ist, und einem zweiten Ende, v) einen zweiten optischen Multiplexer (M02) vom Typ Nx1 mit mindestens N Eingängen und mindestens einem Ausgang, welcher an das zweite Ende der optischen Uplink-Hauptfaser (F1 M) angeschlossen ist, und vi) N zweite optische Koppler (CO2-n) mit mindestens Kn jeweils an den Ausgang eines der Kn entfernten Geräte (ED-kn) einer der N Gruppen (Gn) angeschlossenen Eingängen und mindestens einem an einen der N Eingänge des besagten zweiten optischen Multiplexers (M02) angeschlossenen Ausgang.

8. Sende-/Empfangsvorrichtung (D2) für ein sogenanntes entferntes Kommunikationsgerät, welche für das Koppeln an ein Kommunikationsgerät (TR), die sogenannte Netzkopfstation, ausgelegt ist, wobei das besagte entfernte Gerät (ED-k) und die besagte Netzkopfstation (TR) Teil eines passiven optischen Netzwerks (R) sind, wobei die Sende-/Empfangsvorrichtung umfasst: i) Einen Koppler (CO2) mit einem Eingang sowie einem ersten und einem zweiten Ausgang, welcher dazu ausgestaltet ist, von der besagten Netzkopfstation (TR) an seinem Eingang Alternanzen eines ersten Abschnitts einer optischen Trägerfrequenz, welcher mit Daten gemäß einem gewählten Durchsatz und während eines ersten Zeitintervalls moduliert ist, und eines zweiten Abschnitts der besagten optischen Trägerfrequenz, welcher mit einem Taktsignal bei einer Grundfrequenz, welche dem Durchsatz entspricht, während eines zweiten Zeitintervalls moduliert ist, zu empfangen, ii) eine Empfangsvorrichtung (Rx'), welche an den ersten Ausgang des besagten Kopplers (CO2) gekoppelt und dazu ausgelegt ist, die besagte Grundfrequenz in dem empfangenen ersten und dem empfangenen zweiten Abschnitt zurückzugewinnen, und iii) eine Übertragungsvorrichtung (Tx'), welche an den zweiten Ausgang des besagten Kopplers (CO2) gekoppelt und dazu ausgelegt ist, während ausgewählten und von dieser Netzkopfstation synchronisierten Zeitschlitzen den Teil, welcher den besagten Zeitschlitzen in zumindest bestimmten der zweiten nacheinander an dem besagten entfernten Gerät (ED-k) empfangenen zweiten Abschnitten nach der Übermodulation mit zu übertragenden Daten des darin enthaltenen Taktsignals an die besagte Netzkopfstation (TR) zu übertragen.

9. Vorrichtung nach Anspruch 8, **dadurch gekennzeichnet, dass** die besagte Übertragungsvorrichtung (Tx') dazu ausgelegt ist, das besagte Taktsignal mit zu übertragenden Daten gemäß einer Technik, welche in einer mindestens eine sogenannte Ohne-Rückkehr-zu-Null-Technik und eine sogenannte Rückkehr-zu-Null-Technik umfassenden Gruppe gewählt wird, zu übermodulieren.

10. Vorrichtung nach Anspruch 9, **dadurch gekennzeichnet, dass** die besagte Übertragungsvorrichtung (Tx') dazu ausgelegt ist, das besagte Taktsignal mit zu übertragenden Daten gemäß der besagten sogenannten Ohne-Rückkehr-zu-Null-Technik zu übermodulieren

11. Entferntes Kommunikationsgerät (ED) für ein passives optisches Netzwerk, **dadurch gekennzeichnet, dass** es eine Sende/Empfangsvorrichtung (D2) nach einem der Ansprüche 8 bis 10 umfasst.
